# EUROPÄISCHE PATENTSCHRIFT

(11) **EP 0 488 097 B1**
(45) Veröffentlichungstag und Bekanntmachung des Hinweises auf die Patenterteilung: **14.09.1994**
(21) Anmeldenummer: 91120036.8
(22) Anmeldetag: 25.11.1991
(51) Int. Cl.: B01D 49/00, B01D 51/08, B01J 19/10

(54) **Akustische Kammer für die Aerosolbehandung von Abgasen**
An acoustic chamber for the aerosol treatment of exhaust gases
Chambre acoustique pour le traitement d'aérosol contenu dans les gaz d'échappement

(30) Priorität: 27.11.1990 LU 87850
(43) Veröffentlichungstag der Anmeldung: 03.06.1992
(73) Patentinhaber: EUROPÄISCHE ATOMGEMEINSCHAFT (EURATOM), L-2920 Luxembourg (LU)
(72) Erfinder: Magill, Joseph, W-7500 Karlsruhe (DE); McGinley, John, W-7500 Karlsruhe (DE); Richter, Karl, W-7500 Karlsruhe (DE)
(74) Vertreter: Weinmiller, Jürgen

(56) Entgegenhaltungen:
- DE-C- 884 721
- DE-C- 947 264
- LU-A- 56 134
- US-A- 2 215 484

## Beschreibung

Die Erfindung bezieht sich auf eine akustische Kammer für die Aerosolbehandlung von Abgasen, die die Kammer durchströmen sollen und darin einem akustischen Feld ausgesetzt sind.

Abgase enthalten oft sehr feine Festkörperteilchen, deren Anteil möglichst verringert werden muß, ehe die Abgase in die Umwelt entlassen werden. Bisher verwenden solche Staubfilter entweder elektrostatische Felder oder mechanische Verfahren (Zyklon- oder Venturiseparatoren), die sehr teuer sind und deren Filterwirkung in Grenzen bleibt.

Aus dem spanischen Patent 459 523 ist ein Vorschlag bekannt, eine Ultraschallkammer zur Rauchgasreinigung zu verwenden. Dort wird in einem Rohr axial zu dessen Achse ein stehendes Schallfeld erzeugt, und die zu reinigenden Gase werden spiralförmig durch das Rohr geleitet, wobei durch das Schallfeld die Partikel in Vibration und Interaktion versetzt werden, so daß sie sich agglomerieren. Anschließend können die größeren Teile durch einfache mechanische Filter aus den Abgasen entfernt werden.

Die akustische Kammer gemäß dieser Druckschrift ist nur für kleine Rauchgasdurchsätze geeignet, da sich bei größeren Durchsätzen der spiralförmig-laminare Verlauf der Rauchgasströmung in eine turbulente Strömung verwandelt. Außerdem sind die Druckverluste beim Durchgang durch die Kammer erheblich und erfordern ggfs. ein zusätzliches Gebläse, um die Abgase dann in den Kamin zu fördern.

Aufgabe der Erfindung ist es, eine solche Kammer an den Einsatz im industriellen Maßstab anzupassen, d.h. an größere Durchsätze, und zugleich die Druckverluste in der Kammer zu reduzieren.

Diese Aufgabe wird erfindungsgemäß durch die akustische Kammer gelöst, die die Merkmale des Anspruchs 1 aufweist. Im Gegensatz zu der bekannten Aerosolkammer durchströmen die Abgase die Kammer entlang von deren Achse und geradlinig, während das Schallfeld vielfach gebrochen die Kammer füllt. Zugleich wird durch die Verwendung mehrerer Schallquellen eine optimale Beschallung der Kammer erzielt, ohne daß sich die einzelnen Schallwellen gegenseitig beeinflussen. Aus bautechnischen Gründen ist es sinnvoll, der Kammer einen quadratischen oder hexagonal gleichmäßigen Querschnitt zu verleihen.

Durch die Maßnahme gemäß Anspruch 3 wird es möglich, die Schallquellen exakt auf die zugeordneten Reflektoren auszurichten, was zu einem optimalen Energiewirkungsgrad des Schallfelds führt.

Nachfolgend wird die Erfindung anhand eines bevorzugten Ausführungsbeispiels mit Hilfe dreier Figuren näher erläutert.

Figur 1 zeigt in Perspektive eine Außenansicht einer Kammer gemäß der Erfindung.

Figur 2 zeigt einen Schnitt entlang der Achse durch diese Kammer.

Figur 3 zeigt Mittel, wie sie verwendet werden können, um die Länge der Kammer zwischen den Schallquellen und den Reflektoren zu verändern.

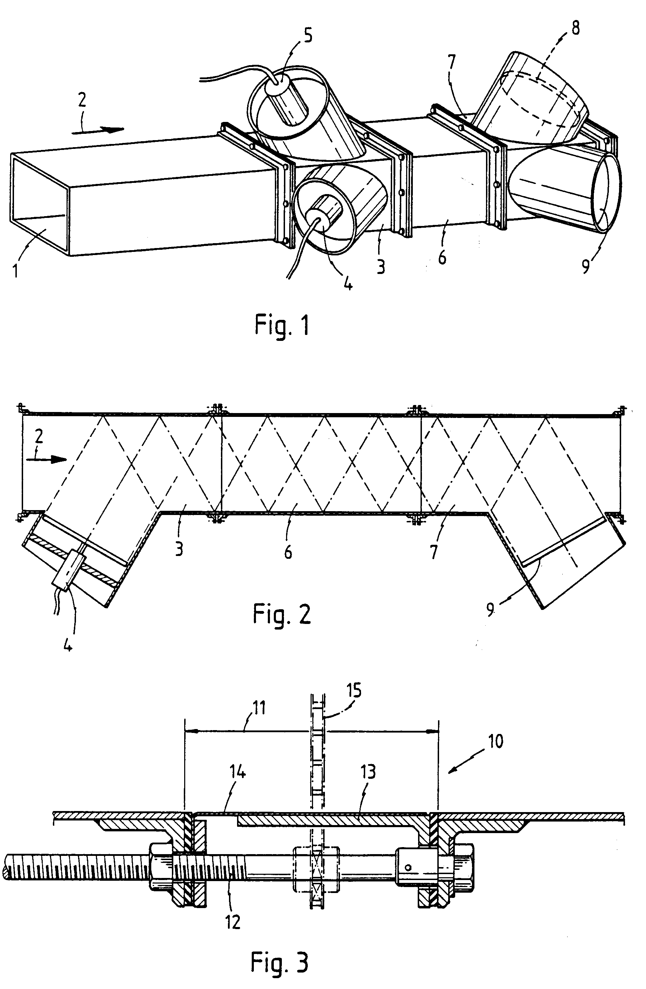

In Figur 1 ist eine erfindungsgemäße akustische Kammer für die Aerosolbehandlung von Abgasen dargestellt. Sie ist in eine Anlage zur Rauchgasreinigung integriert und hat in diesem Rahmen die Aufgabe, die feinen Partikel zu größeren Staubteilchen zu koagulieren, die dann in einem (nicht dargestellten) mechanischen Filter abgesondert werden können. Die Abgase gelangen über einen Eingangsschacht 1 in Richtung des Pfeils 2 in die Kammer, die aus drei fluchtend angeordneten Schachtteilen besteht, nämlich einem ersten Schachtteil 3, an den Schallsender 4 und 5 angebaut sind, einen Schachtteil 6, in dem die Interaktion zwischen dem Schallfeld und den Rauchgaspartikeln im wesentlichen stattfinden soll, und einem Schachtteil 7, an den Schallreflektoren 8 und 9 angebaut sind. Die Schächte haben quadratischen Querschnitt und werden von den Rauchgasen ohne Behinderung linear durchströmt. Die Schallquellen 4 und 5 sind jeweils einer von zwei benachbarten Seiten des Schachtteils 3 zugeordnet und sind so ausgerichtet, daß ihre Achse unter einem Winkel von z.B. 60° auf die jeweils gegenüberliegende Wand trifft. In gleicher Weise sind auch die Reflektoren 8 und 9 am Schachtteil 7 angebaut. Im Schnitt gemäß Figur 2 sind die Schallquelle 4 und der zugeordnete Reflektor 9 sowie das dadurch im Schachtteil 6 sich ergebende Schallfeld dargestellt. Wird die Länge des mittleren Schachtteils 6 geeignet gewählt und werden die Schallquelle 4 und der Reflektor 9 präzise aufeinander ausgerichtet, dann ergibt sich ein stehendes Schallfeld wie angedeutet.

Die Figur 2 könnte auch als ein orthogonaler Schnitt betrachtet werden, der durch die Schallquelle 5 und den Reflektor 8 verläuft. Die Schallquelle besitzt beispielsweise eine Frequenz von 20 kHz, und die Länge der Kammer zwischen den Schallquellen und Reflektoren beträgt zwischen 1 und 3 Meter. Verwendete man niedrigere Frequenzen, z.B. 10 kHz, dann könnte ein stehendes Schallfeld in einer wesentlich längeren Kammer von bis zu 6 Metern erzeugt werden, was bedeutet, daß die Rauchgase länger in der Kammer verweilen und damit der Koagulationseffekt verstärkt wird. Die insgesamt investierte akustische Leistung beträgt beispielsweise 300 Watt, wobei auch hier bei niedrigeren Frequenzen eine größere Leistung möglich wird.

Um die akustische Länge zwischen den Schallquellen und den Reflektoren präzise anpassen zu können und das Schallfeld optimal zu stabilisieren, ist es günstig, wenn die Länge des mittleren Schachtteils 6 geringfügig und präzise verändert werden kann. Hierzu verwendet man beispielsweise an einem Ende des mittleren Schachtteils 6 einen Doppelflansch, wie er in Figur 3 im Detail angedeutet ist. Dort ist dieser Schachtteil nicht unmittelbar an den Schachtteil mit den Reflektoren oder Schallsendern angeschraubt, sondern über ein Zwischenglied 10, dessen Länge 11 sich in Achsrichtung des Schachts durch Schraubbolzen 12 verändern läßt, wobei die Wandkontinuität durch zwei aufeinander gleitende Wandteile 13 und 14 sichergestellt ist. Die Vielzahl von über den Schachtumfang verteilten Bolzen 12 kann über eine Kette 15 an einen gemeinsamen Antriebsmotor (nicht dargestellt) gekoppelt sein, so daß die Längsverstellung von der Bedienungsperson jederzeit und präzise durchgeführt werden kann.

Um die Reflektion an den Schachtwänden möglichst verlustfrei zu halten, empfiehlt es sich, die Oberflächenrauhigkeit der Innenseite der Schächte gering zu halten, derart, daß möglichst keine größeren Vorsprünge als 1 mm vorliegen.

Die Erfindung ist nicht auf das anhand der Figuren erläuterte bevorzugte Ausführungsbeispiel beschränkt. So kann man auch Schächte mit hexagonalem oder gar oktogonalem Querschnitt verwenden und dann drei oder vier Schallquellen den drei oder vier einander gegenüberliegenden Wandpaaren zuordnen. Es ist auch möglich, die Ausbreitungsrichtung des Schalls für alle oder einzelne der aus Schallsender und Reflektor bestehenden akustischen Systeme umzukehren und die Schallsender auf der Seite des Gasaustritts-Schachtteils 7 vorzusehen.

Aufgrund des geradlinigen und praktisch ungestörten Durchlaßquerschnitts der Kammer für den zu filternden Rauch lassen sich die Druckverluste gering halten, so daß auf ein zusätzliches Gebläse verzichtet werden kann. Die Kammer kann je nach Bedarf mit waagrechter, schräger oder senkrechter Achse montiert werden.

## Patentansprüche

1. Akustische Kammer für die Aerosolbehandlung von Abgasen, die von den Abgasen geradlinig und axial durchströmbar ist und in der die Abgase einem akustischen Feld ausgesetzt sind, die einen regelmäßig polygonalen Querschnitt mit 2k Seiten besitzt, wobei k = 2, 3, ..., und an der k Schallquellen (4, 5) vorgesehen sind, deren Achsen, projiziert auf eine Querschnittsebene der Kammer (3, 6, 7) zueinander einen Winkel von 180/k Grad einschließen und die jeweils einer Seitenwand der Kammer zugeordnet sind, und wobei k Reflektoren (8, 9) ebenso angeordnet sind, sowie die Schallquellen unter einem solchen Winkel schräg in die Kammer hineinstrahlen, daß der Schall mehrfach an den Seitenwänden der Kammer reflektierbar ist, ehe er am anderen Ende der Kammer auf den ebenso schräg angeordneten Schallreflektor (8, 9) trifft, der diesen auf sich selbst reflektiert, so daß sich eine stehende Welle ausbildet.

2. Akustische Kammer nach Anspruch 1, dadurch gekennzeichnet, daß k zwei oder drei ist.

3. Akustische Kammer nach einem der Ansprüche 1 bis 2, dadurch gekennzeichnet, daß Mittel (10) vorgesehen sind, um die Länge der Kammer (3, 6, 7) zwischen den Schallquellen (4, 5) und den Reflektoren (8, 9) zu verändern.

4. Akustische Kammer nach einem der Ansprüche 1 bis 3, dadurch gekennzeichnet, daß die Schallquellen (4, 5) zur Anregung eines Schallfelds von unter 25 kHz Frequenz geeignet sind.

## Claims

1. An elongate acoustic chamber for the treatment of exhaust gas aerosols, which are to flow straight through the chamber along the chamber axis and which are exposed therein to an acoustic field, the chamber having a regular polygonal cross-section with 2k sides (k = 2, 3, ...), and k sound sources (4, 5) being provided, the axes of which, projected on a cross-section plane of the chamber (3, 6,7), include an angle of 180/k degrees and which are each associated with one respective of k adjacent side walls of the chamber, and k reflectors (8, 9) being likewise disposed, the sound sources transmitting sound waves into the chamber under such an angle that the sound is repeatedly reflected from the walls of the chamber before it hits on the other end of the chamber a sound reflector (8, 9), which is likewise disposed in an inclined position, so that a stationary wave is formed.

2. An acoustic chamber according to claim 1, characterized in that k is two or three.

3. An acoustic chamber according to one of claims 1 and 2, characterized in that means (10) are provided allowing to change the length of the chamber (3, 6, 7) between the sound sources (4, 5) and the reflectors (8, 9).

4. An acoustic chamber according to one of claims 1 to 3, characterized in that the sound sources (4, 5) are capable to excite a sound field at a frequency of below 26 kHz.

## Revendications

1. Chambre acoustique pour le traitement d'aérosols de fumées, cette chambre étant susceptible d'être parcourue par les fumées de façon rectiligne et axialement et les fumées y étant soumises à un champ acoustique, la chambre présentant une section droite polygonale régulière de 2k côtés avec k= 2, 3, ..., k sources acoustiques (4, 5) étant prévues, dont les axes enferment entre eux un angle de 180/k degré, vu en projection sur un plan de section de la chambre (3, 6, 7), les sources étant respectivement associées à une paroi latérale de la chambre, k réflecteurs (8, 9) étant disposés de la même façon, les sources acoustiques émettant en biais une onde sous un tel angle dans la chambre que l'onde est susceptible d'être réfléchie plusieurs fois sur les parois latérales de la chambre avant de tomber à l'autre extrémité de la chambre sur le réflecteur (8, 9) qui est également disposé en biais et qui réfléchit cette onde sur elle-même de façon qu'il s'établisse une onde stationnaire.

2. Chambre acoustique selon la revendication 1, caractérisée par le fait que k est choisi à deux ou trois.

3. Chambre acoustique selon l'une des revendications 1 et 2, caractérisée par le fait qu'on prévoit des moyens (10) permettant de modifier la longueur de la chambre (3, 6, 7) entre les sources acoustiques (4, 5) et les réflecteurs (8, 9).

4. Chambre acoustique selon l'une des revendications 1 à 3, caractérisée par le fait que les sources acoustiques (4, 5) sont conçues pour exciter un champ acoustique d'une fréquence en dessous de 25 kHz.
